# EUROPEAN PATENT APPLICATION

(11) **EP 1 057 397 A1**
(43) Date of publication of application: **06.12.2000**
(21) Application number: 98956001.6
(22) Date of filing: 30.11.1998
(51) Int. Cl.: A01D 34/73, A01D 50/00

(54) **ROTARY EDGE AND BLADE OF THE SAME**

(30) Priority: 19.02.1998 JP 8010898
(71) Applicant: Kanemaru, Yutaka, Miyazaki-gun, Miyazaki 880-0212 (JP)
(72) Inventor: Kanemaru, Yutaka, Miyazaki-gun, Miyazaki 880-0212 (JP)
(74) Representative: Patentanwälte Lippert, Stachow, Schmidt & Partner
(86) International application number: JP9805392
(87) International publication number: WO9941965

(57) **Abstract**

A revolutionary cutter of a mower or other machine which solves all problems with conventional metal cutters and cord type rotary cutters. Particularly the rotary cutter has excellent durability and safety, and enables efficient and reliable mowing work. Its running cost is reduced to a very low level as compared with a conventional cutter.
A blade is made from hard synthetic rubber in the shape of a substantially rectangular plate with a part of the tip portion thereof chipped off. The upper layer of the blade is an abrasive layer of synthetic rubber itself, and the lower layer of the blade is an abrasion-proof layer having reinforcement means. The reinforcement means includes reinforcing cords of synthetic fiber laminated under the middle thickness of the blade along the longitude thereof and a reinforcing cloth covering the bottom and side surfaces of the blade.

## Description

### FIELD OF INVENTION

This invention is related to a rotary cutter to be used on a lawnmower to or on a cutting machine for fodder, and a blade of such a cutter. In this invention, "blade" means an edge portion of the rotary cutter, and thus it cuts grass by hitting.

### BACKGROUND OF THE INVENTION

A variety of mowers exist for cutting pastures or weeds trimmers ranging from big self-propelled mowers to small shoulder sling type. Many of such mowers employ rotary cutters. Many of pasture cutters also use rotary cutters.
The most typical rotary cutter is a metal disc having a plurality of edges which protrude from around its periphery, i.e. shaped like a circular saw blade. Ultra hard metal tips are embedded in the edges to improve their quality and durability. The hardness presents certain disadvantages:
(1) When the edge strikes stone, the stone or blade edge may chip off and be thrown from the blade. These flying stones or blade chips may injure the mower operator or by-standers in the area.
(2) When weeding under trees, the edge may injure trees when the blade strikes the tree trunk This is especially true fruit trees, as such injury may damage the tree seriously.
(1) (3) Obviously, the cutting quality of the rotary cutter degrades as the edge is worn and abraded. To restore the quality, polishing of the cutting edge or a change of the cutter is required. Such maintenance costs can be expensive. A resin cord cutter was invented to overcome the above weak points of metal cutter and its demand has recently been sharply rising.

A resin cord having about 1 mm thickness is wound around a reel of rotary center, a certain length of the cord is maintained, and the cutter is spun. The side of the cord cuts grass. Since the resin cord is soft and flexible, the above-mentioned disadvantage of metal are reduced. However, the cord wears away quickly because of its softness. The structure of the cord cutter determines how the constant length of the cord is maintained by drawing out the tip from the reel. Even if problems in maintaining cord length are solved, the following problems remain.
(1) The constant length of the cord must be maintained to keep cutting quality, and then the structure of a reel becomes complicated. This increases the cost of the cord cutter. Also, malfunction of the cord cutter caused by dust during outdoor operation can not be avoided.
(2) The cutting ability is limited because it is only a thin resin cord. Grasses and weeds with thick stems often can not be cut.
(3) Although the design anticipates abrasion of the cord, the capacity length of a reel to wind the cord is limited. It may be necessary to exchange the reel often.
(4) The reel which winds cord is sometimes overheated by high speed spinning Thereby, the cord will be fused off by such overheating and be lost far faster than by abrasion of the tip thereof.
(5) In weeding under trees, the resin cord may wind around a tree and injure its bark when the cord hits the tree. Small trees such as grape vines, may be critically damaged.

To try to solve the forgoing problems, tip blades of elastic material such as urethane rubber is provided in Japanese Patent Publication (Kokai) 1-60308, and the entire blade is made from synthetic rubber in Japanese Patent Publication (Kokai) 63-129425. U. However, these prior art references do not resolve the above problems completely.
The present invention is related to a revolutionary rotary cutter and its blade for a mower or other machines, which resolve the problems of the prior art completely. Particularly, the subject matter of the present invention is a rotary cutter and its blade, with improved durability and safety, which mows efficiently and reliably. The operating cost of the present invention is very low level compared with conventional products.

### SUMMARY OF THE INVENTION

In this invention, a rotary cutter of a mower or other machine, which is rotated with driving force comprises a blade which constitutes said cutter. At least said blade is made from soft material. Said soft material is worn away by striking the thing to be cut. At least two layers are laminated vertically against the rotating surface of said rotary cutter, and said two layers have different abradable natures.

Further at least the blade which constitutes said cutter is made from soft material, said soft material is abraded when it hits the thing to be cut, and reinforcing materials are disposed along the revolved plan of said rotary cutter.

The blade is worn away by hitting things which are cut, and a slant surface is created by one layer being easily worn any and another layer being less easily worn away. Accordingly, the cross section of a blade becomes sharpened and its cutting quality is improved. The reinforcing material maintains its long durability.

On the other hand, the inherent disadvantages of a metal cutter are overcome because it is a soft material.

A blade, which constitutes a rotary cutter of mower or other machine, is made from soft material and is plate shaped wherein at least two layers are laminated. Said soft material is abraded when it hits the thing to be cut. Said two layers have different abradable natures, and reinforcing material is disposed along said rotary cutter.

Thereby, the same effects as the above mentioned rotary cutter are achieved. The blade is easily changed and thus it achieves improved workability and low running cost.

### BRIEF DESCRIPTION OF THE DRAWINGS

Figure 1 is perspective view of a blade of Embodiment 1.
Figure 2 is a section on line A-A in Figure 1.
Figure 3 is a perspective view of the blade of Embodiment 1 which has been transformed by abrasion.
Figure 4 is plan view of rotary cutter of Embodiment 2.
Figure 5 is partial plan view which demonstrates the use of the rotary cutter of Embodiment 2.
Figure 6 is a plan view of rotary cutter of Embodiment 3.
Figures 7, 8 and 9 are a partly broken perspective and side cross sections, showing features of the blade of Embodiment 4.
Figure 10 is a plan view of a blade of Embodiment 5.
Figure 11 is a plan view of a rotary cutter of Embodiment 5.

### BEST MODE OF THE INVENTION

In this invention, a blade of a rotary cutter for a mower or other cutting machines is formed with soft material, and such soft material is worn away by hitting grass during mowing. However, abrasion is too fast or the blade is easily broken if the material is too soft. The abrasion or breaking off is controlled by reinforcing means. If such reinforcing means is used throughout the entire thickness of the blade, the edge of the blade will be maintained as a flat edge or nearly flat edge and then cutting quality will be hardly kept. A layer which is easily worn away (hereinafter "abradable layer") and another layer which is more slowly worn away (hereinafter "abrasion-proof layer") are laminated. In the abradable layer, a slant surface is created by the abrasion during mowing. The abrasion-proof layer retains its original shape by maintaining its durability. Accordingly, the cross-section of a blade becomes wedge-shaped by the abradable layer having a slant surface and abrasion-proof layer retaining its original shape. This shape is maintained by continuous abrasion, and its edge is kept as a sharpened knife through the mowing work. Thus, the cutting quality of the blade is maintained while using it.

The blade is fragile against strong shearing force because it is made of soft material. It will be easily broken off if it is fixed along the radial line from center of the rotary cutter. The rotary cutter is designed in the manner that the blade is backswept from radial line when the cutter is rotating. Proper sweepback will be set depending on the material and shape of the blade when it is fixed. Another blade is installed as a freely swing-able element by pivoting about a point, and it will avoid orthogonal shock when striking thick stems.

The number of cords present in a cord rotary cutter may be limited to two because of its structure. In this invention, the number of blades is determined as desired depending on its material and installation structure. Of course, with fewer number of blades, the force on each blade will increase. Therefore, the durability of the blade on a cutter will increase as the number of blades increases. However, the weight of the cutter will be heavier when the number of the blades is increased and the load on the driving machine will become larger. The shape and number of blades should be decided by capability of the driving machine.
Each Embodiment is hereby described with reference to the drawings.

### Embodiment 1

An example of the basic structure of a blade is shown in this Embodiment 1.

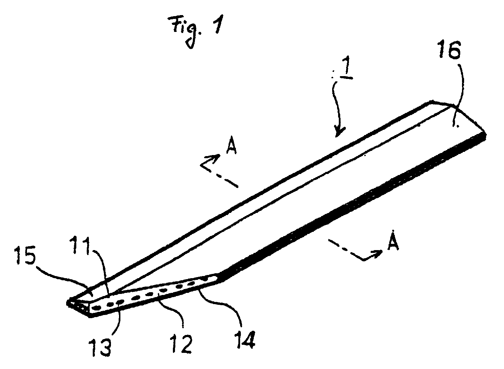

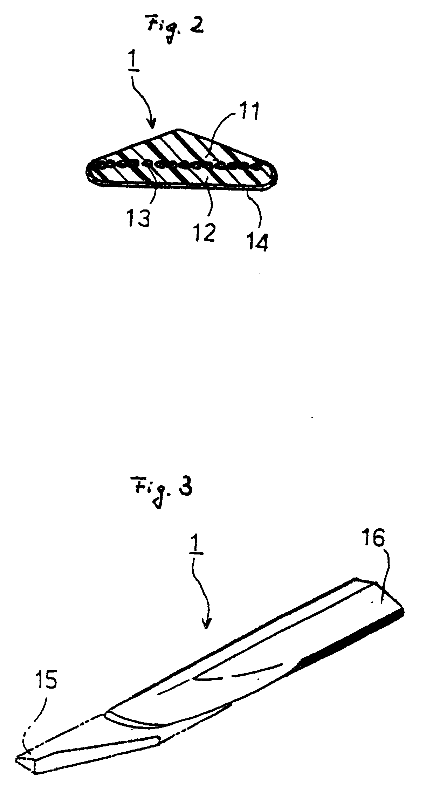

As shown in Figure 1, the entire blade 1 is made from hard synthetic rubber and is formed as an almost rectangular plate with a part of the blade's tip being chipped off. The upper portion of the blade is made from only synthetic rubber and is the above-mentioned abradable layer 11. The lower portion of the blade is the abrasion-proof layer 12 having reinforcement means. As shown in Figure 2, reinforcing cords 13 are laminated just under the middle thickness of the blade 1 along its longitudinal direction as a reinforcement means. A reinforcing cloth 14 covers the bottom surface and side surfaces of the blade 1 as another reinforcement means.

The upper portion of the abradable layer 11 will be worn away most easily and the bottom surface of the abrasion-proof layer 12 will be worn away with the most difficulty. When the blade 1 is transformed by friction with mowed grass, the outer portion of rotation is worn away more than its center portion and thus tip end 15 is worn away more than the installing end 16.

The blade 1 gradually becomes knife-shaped by its abrasion during mowing. Although it will become shorter as use continues, this knife-shape will be maintained. Thereby, its shape becomes more suitable for mowing as use continues, and such shape can be maintained until the blade is worn to the minimum usable length.

The blade 1 is made from synthetic rubber in this Embodiment. However, this invention is not limited to this Embodiment. A blade can be made from resin or other material, which is abradable.
The reinforcement means is not limited to a resin fiber material, and can be resin having a different hardness, such as ceramic or metal, which can be laminated.

The blade 1 of the Embodiment 1 can be applied to both a fixed type rotary cutter and a swing-out type rotary cutter mentioned below, and it achieves the following advantages:
1. The above-mentioned disadvantages of a metal blade will be overcome because the cutter is made from a soft material.
2. Since it is made from soft material with reinforcement means and is formed as a plate, it has excellent durability. Thereby, the disadvantages of cord cutters are overcome.

Accordingly it is an ideal blade for a rotary cutter because it is extremely safe, achieves low running cost and cutting quality is maintained for a long term because of its shape.

Particularly, when applied to a mower, such mower is suitable for all grass mowing not only pasture and weeding under trees. For example, it is possible to cut weeds without significant damage to the bark of trees, to cut only ivy intertwined with the wire netting of a fence without affecting by the fence, and to cut the plant which is the target.

The example applications of the blade are hereby shown.

### Embodiment 2

In the Embodiment 2, an example of a swing-out type rotary cutter is described, in which the blade is swing-able on the cutter.

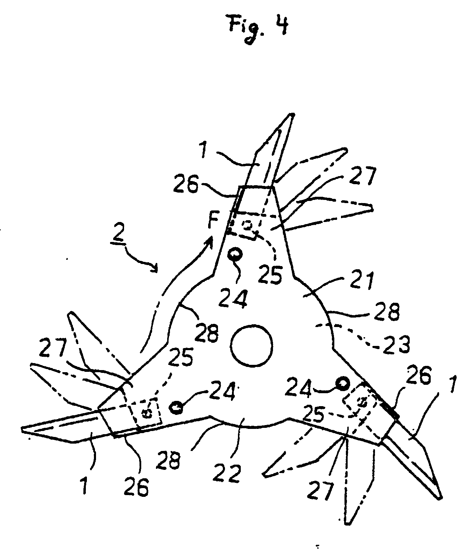

As shown in Figure 4, a rotary cutter 2 of this Embodiment is driven rotationally by connecting the center thereof to a driving apparatus (not shown). Three of the above mentioned blades 1 are installed on the rotator 21.

An upper disc 22 and a lower disc 23 are approximately triangle shaped and these discs are fixed with bolts 24 having a space between each other. Pivot 25 is provided at each installation protrusion portion 27 and each blade 1 is respectively installed at said pivot 25. Metal installation plates (not shown) are fixed on an installation end 16 of blade 1. An installation hole is bored at said installation plates and the pivot 25 is inserted through the installation hole. Whereby the blade 1 becomes freely swing-able by fixing both discs.
A supplement edge 26 is formed at upper disc 22, which is protrudes from the outer side of pivot 25, and its function will be described later.
The mowing work by the rotary cutter 2 is hereby described. As mentioned above, the cutting quality of blade 1 will be improved as its use continues. The most typical advantage of this rotary cutter 2 is that the installed angle changes depending on the hardness of the grass which is cut.

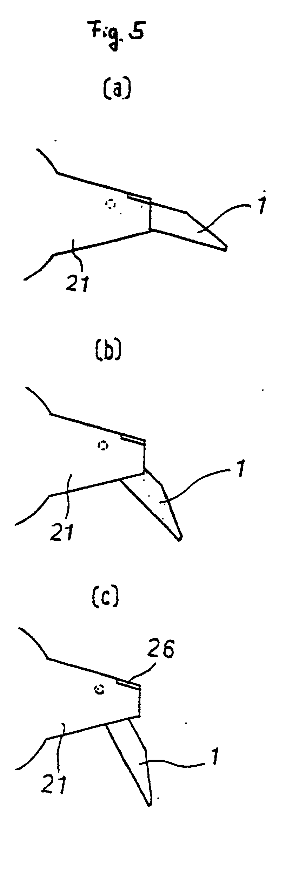

As shown in Figure 5(a), as blade 1 rotates and strikes against thin soft grass, it is only slightly deflected from a radial position because of the relative strength of the centrifugal force. Mowing work will be efficient because of the wide cutting area.

As shown in Figure 5(b), deflection of the blade 1 from a radial position will be increased when it hits a comparatively hard stem. The blade 1 will be pulled and cut the stem with whole edge of the blade 1. In this manner, an unreasonable force is not loaded on the blade 1.

As shown in Figure 5(c), if such a stem is too hard to be cut by the blade 1, the blade 1 will be deflected so as to avoid the stem completely. If such a stem must be cut, a supplement edge 26 is able to cut the stem by sliding rotator 21. Therefor, supplement edge 26 will be useful to overcome the cutting ability of the soft material.

As shown in Figure 4, the installation protrusion portions 27 are which blades 1 are installed are protruding from the inner periphery 28 of rotator 21. This inner periphery 28 is defined by a circumference around the center of the rotator 21. Therefore, aerodynamic airflow F is created around the inner periphery 28 while rotator 21 is rotating. This airflow F keeps the blade 1 in a stable angle. The blade 1 will be stabilized at the positions having a certain backsweep from radial extension of rotator 21 because the airflow F will flow along the install protrusion portions 27.

Such stable angle will efficiently prevent unusual sound or vibration.

### Embodiment 3

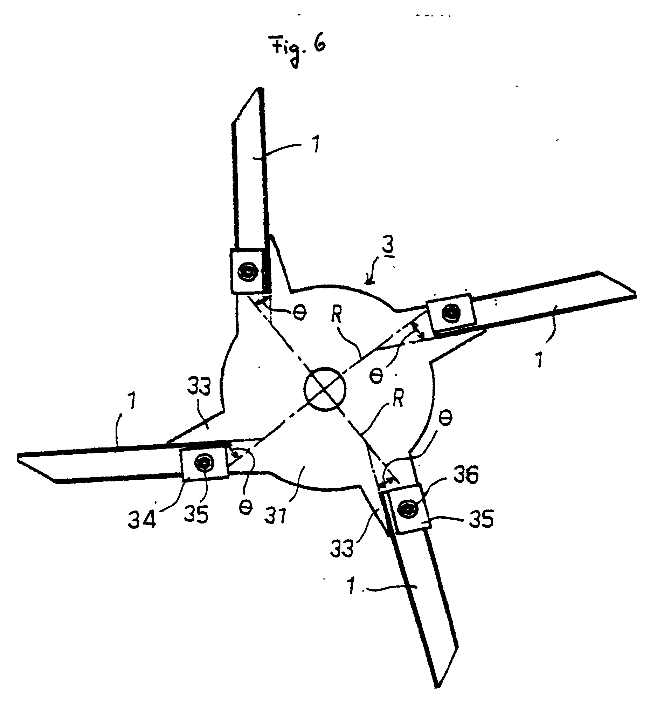

A fixed type rotary cutter is described in the Embodiment 3.
As shown in Figure 6, four of the above-mentioned blades 1 are fixed to a rotator 31 of the rotary cutter 3 in this Embodiment. The rotator 31 is a metal disc which is approximately square and installation protruding portions 33 are formed thereon. The blades 1 are fixed to the installation protruding portions 33 with installation members 35 and bolts 36.
The blades 1 are angled back from radial lines R in the rotating direction, i.e., the blades 1 have backsweep and thus minimize the impact against the blades with grass. The abrasion rate of the blades 1 is different between the inside and outside because of the speed difference. The outside will be worn any more quickly and then the blades 1 are transformed to a knife-shape.
The angle of sweephack is dependent on the material or size of the blade. About 5 degrees to about 60 degree of backsweep may be applied. If blade material is strong in tensility and shearing such as having reinforcement means of fiber material, 10 degrees to 45 degrees of backsweep will be desired. The sweephack is not limited to straight line, as a curved line of sweepback is also useful.

### Embodiment 4

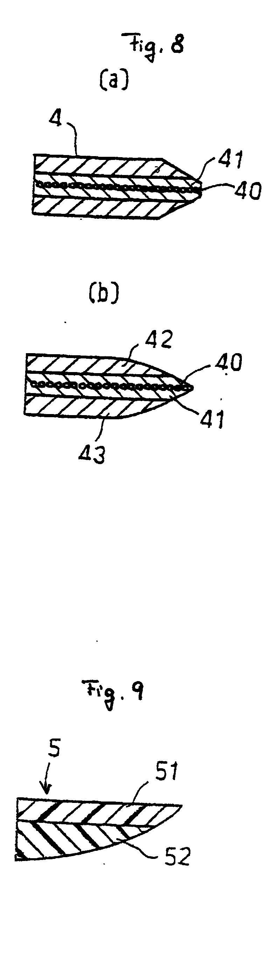

Examples of blades other than the blade shown in Embodiment 1 are described in the Embodiment 4 by section structures thereof.
As shown in Figure 8(a), the reinforcement means 40 is provided in middle layer 41 of blade 4. The upper layer 42 and lower layer 43 will be worn away faster and the middle layer 41 will remain after use, as is shown in Figure 8(b). Thereby both upper and lower sides are sharpened.

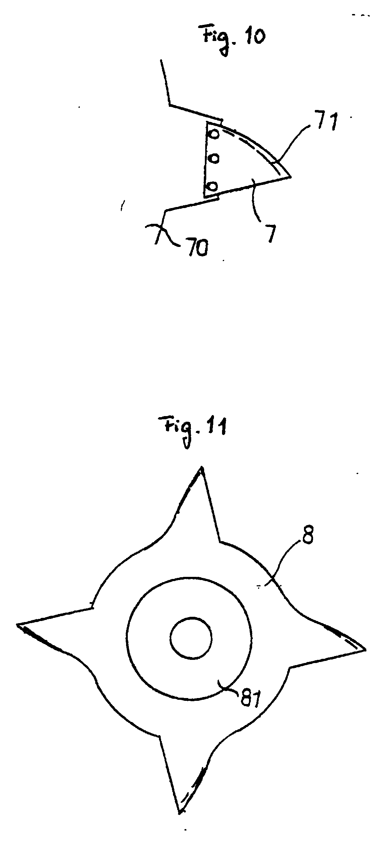

A blade can be made from two kinds of resin materials having different strength. For instance, upper layer 51 of blade 5 is harder than lower layer 52, as shown in Figure 9. The original section shape of the blade is formed as wedge, and this shape will be maintained by abrasion thereof.

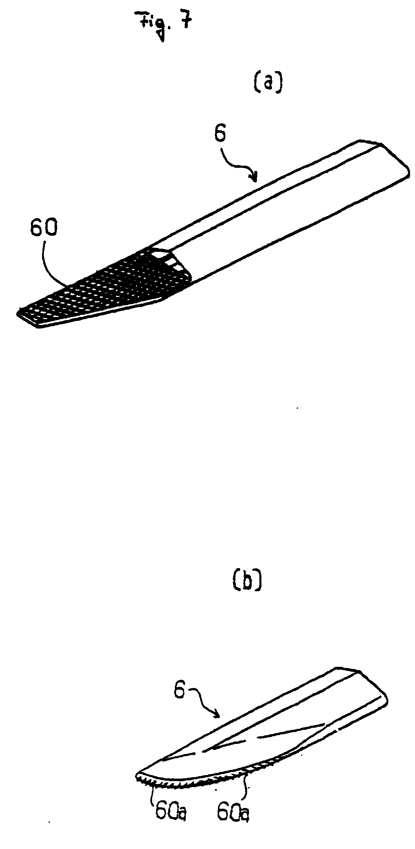

Further, a thin metal string net is useful as a reinforcement means. As shown in Figure 7(a), metal net 60, which is made from metal strings, is laminated in the middle layer of blade 6. The blade 6 will be worn away in mowing work, and both sides will be sharpened alike Figure 7(b). As shown in Figure 7(b), however, tip end 60a of the net 60 will remain. Thereby, tip ends 60a protrude at edge successionally and form saw teeth. Such a saw blade will be useful to mow weeds which have thick stems, but not for trees.

### Embodiment 5

An example of a plan shape of a rotary cutter including a blade is described in Embodiment 5. Although blades shaped as a long flat plate are introduced in the forgoing Embodiments, this invention is not limited by those earlier Embodiments.

For Example, a blade 7 is formed as a wide triangle shape as shown in Figure 10. The edge 71 is curved and the blade 7 is installed such that edge 71 corresponds to the above-mentioned sweepback.

### Embodiment 6

The entire cutter is uniformly made from soft material in this Embodiment.
Thus, the entire cutter and not only the blade is made from soft material having reinforcement means.

As shown in Figure 11, the entire cutter 8 is made from soft material having the same or similar reinforcement means as shown in the Embodiment 1 or 4. A reinforcing plate 81 is provided in the center of the rotary cutter 8 to connect with a driving apparatus.

The cutting quality, durability and safety of this embodiment are the same the as foregoing blades. The advantages of such a uniform cutter are ease of manufacture and easy changing.

### Embodiment 7

Blades are applied to rotary cutters of the above Embodiments. However, it is possible to fit a plurality of blades on a belt, i.e. a mower having an endless track cutter (not shown) can be made. Therefore, a big self-propelled mower having such an endless track cutter will achieve efficient mowing over a large cutting area.

Consequently, the present invention is able to provide a mower having features as below.
(1) The abrasion of a blade in mowing work is utilized to maintain stable cutting quality thereof.
(2) The disadvantages of metal blades are overcome completely, and safe mowing is attained.
(3) The running cost is reduced to remarkably low level as compared with conventional rotary cutter because of its excellent durability.
(4) Injury to the bark of trees is not necessary in weeding under the trees.
(5) It is operated in such a manner that the blades rotate parallel to the ground. Its cutting area becomes larger than conventional metal cutter or cord type cutters, and then working capability will be improved conspicuously.

### Industrial Applicability

The rotary cutter and its blade of this invention can be applied to the variety mowers from a big self-propelled mower to a small shoulder sling type. The most suitable type will be selected depending on the nature of the mowing and then safe and efficient mowing will be achieved.

## Claims

1. A rotary cutter of a mower or other machine which is rotated with a driving force comprising; a blade constituting said cutter, at least said blade being made from soft material, said soft material being abradable when hitting a thing to be cut, at least two layers being laminated vertically against a rotating surface of said rotary cutter, and said two layers having different abradable natures.

2. A blade which constitutes a rotary cutter of mower or other machine comprising; said blade being made from soft material, said blade being plate shaped and comprising at least two layers which are laminated, said soft material being abraded when hitting a thing to be cut and said two layers having different abradable natures.

3. A rotary cutter of a mower or other machine which is rotated with driving force comprising; a blade constituting said cutter, at least said blade being made from soft material, said soft material being abradable when hitting a thing to be cut, and reinforcing material being disposed in a plane of said rotary cutter in which said rotary cutter revolves.

4. A blade which constitutes a rotary cutter of mower or other machine comprising; said blade being made from soft material, said blade being plate shaped, said soft material being abradable when hitting a thing to be cut, and reinforcing material being disposed in the plane of said plate shape.

5. The rotary cutter according to claim 3 further comprising; a covering layer being at an upper surface or bottom surface of said blade, and said covering layer being more abrasion-proof than the portion of said blade in which said reinforcing material is disposed.

6. The blade according to claim 4 further comprising; a covering layer being at an upper surface or bottom surface of said blade, and said covering layer being more abrasion-proof than the portion of said blade in which said reinforcing material is disposed.

7. The rotary cutter claimed in claim 1 or 3 further comprising; a rotator, and wherein said blade is installed at the periphery of said rotator, and wherein at the point of installation said blade is pivoted on said rotator so that said blade is freely swingable.

8. The rotary cutter claimed in claim 1 or 3 wherein; a cutting edge of said blade sweeps back from a radial line of said rotator center in a direction opposite from the rotating direction of said rotator.

9. The rotary cutter according to claim 8 wherein, said cutting edge is swept back 5 degrees to 45 degrees.
